(19) **Europäisches Patentamt**

**European Patent Office**

**Office européen des brevets**

(11) **EP 1 462 174 B1**

(12) **EUROPEAN PATENT SPECIFICATION**

(45) Date of publication and mention
of the grant of the patent:
**30.08.2006 Bulletin 2006/35**

(51) Int Cl.:
*B01L 3/00* *(2006.01)*   *G01N 33/543* *(2006.01)*

(21) Application number: **04447080.5**

(22) Date of filing: **29.03.2004**

(54) **Method for the controlled transport of magnetic beads and device for executing said method**

Verfahren zum kontrollierten Transport von magnetischen Partikeln und zugehörige Vorrichtung

Procédé de transport contrôlé de billes magnétiques et dispositif

(84) Designated Contracting States:
**AT BE BG CH CY CZ DE DK EE ES FI FR GB GR HU IE IT LI LU MC NL PL PT RO SE SI SK TR**

(30) Priority: **28.03.2003  US 459243**
**28.03.2003  EP 03447072**

(43) Date of publication of application:
**29.09.2004  Bulletin 2004/40**

(73) Proprietor: **INTERUNIVERSITAIR MICROELEKTRONICA CENTRUM VZW**
**3001 Leuven (BE)**

(72) Inventor: **Wirix-Speetjens, Roel**
**3680 Maaseik (BE)**

(74) Representative: **Van Malderen, Joëlle et al**
**pronovem - Office Van Malderen**
**Avenue Josse Goffin 158**
**1082 Bruxelles (BE)**

(56) References cited:
**FR-A- 2 817 266**     **US-A1- 2002 048 821**
**US-A1- 2002 166 800**

## Description

### Field of the invention

The present invention is related to the field of microelectronic devices, designed to transport and manipulate magnetic beads on chip. Application domains are biochips, biosensors, diagnostics, genetics and molecular studies.

### State of the art and background of the invention

Following the publication of the first draft of the human genome sequence, the next major task is to determine the function that each of the genes (i.e. > 35,000) have in each of the tissues in the body over a range of environmental conditions. Using arrays of thousands of probes which are specific to individual genes, DNA microarrays enable the extent to which individual genes are switched on or off to be determined. Genetic variation among individuals also contributes to variation in the way genes behave in response to changes in the environment. Simultaneous detection of variation at thousands of locations (i.e. single nucleotide polymorphisms or SNPs) in the genome can also be achieved using DNA microarray technology. Applications of DNA microarrays therefore include gene expression profiling, gene sequencing, gene discovery, and genotyping, for users in healthcare, academia and the pharmaceutical and biotechnology industries. Currently the major factors limiting the uptake of DNA microarray technology include low sensitivity, the high cost of the technology, requirement for specialist operators and throughput.

Electronic biochips have the potential to overcome these limitations. Here, exploitation of state-of-the-art micro- and nano-technology design, fabrication and characterisation tools and processes enable development of devices and systems that can interface directly with biological reactions. A possibility involves combining magnetic bead-based bioassays with magnetic sensor technology. From a biotechnology perspective, superparamagnetic beads (0.05-10.0$\mu$m diameter) are available commercially from a number of sources with a range of surface functionalisation chemistries, for well established applications including isolation and transportation of nucleic acids, proteins and whole cells. In microelectronics, GMR-based magnetic sensors have provided an enabling technology for memory applications. Thus, integration of paramagnetic bead-based nucleic acid assays on a functionalised biochip surface incorporating magnetic sensors, provides the basis for a range of biochip platforms.

Next to the detection of the magnetic beads, the transport and manipulation of beads is a limiting factor, which has to be taken into account in biochip designs and methods.

In the past, systems have been described for the manipulation of magnetic microbeads based on permanent or electromagnets with dimensions >5mm, which did not allow for magnetic fields localised over microscale regions. Commercial devices exist for sorting and separation of magnetic microbeads, but they have a limited capability of performing complex manipulations of these beads since they make use of permanent magnets or electromagnets.

In Whitesides et al., "Manipulation of magnetic microbeads in suspension using micromagnetic systems fabricated with soft lithography", Applied Physics Letters [Vol 78, Nr 12 March 19th 2001, pages 1775-1777] and US2002/0166800, systems are described comprising current carrying wires that can generate strong local magnetic field gradients, which in their turn can control the position of magnetic microbeads in aqueous suspension.

### Aims of the invention

It is an aim of the invention to provide a novel method and corresponding devices for the manipulation and transportation of magnetic beads on chip. The invention mainly points to application in the domain of biochips and microarrays, used in diagnostics, genetics and molecular studies, but can be applicable whenever there is a need of performing nanoscale or microscale transport.

### Summary of the invention

A method for the controlled transport of magnetic beads between a position X and different position Y along a path P is disclosed, wherein the magnetic beads are manipulated or transported by applying successively a series of N local magnetic fields which have magnetic field gradients different from 0 in the neighbourhood of the magnetic beads as defined in claim 1.

Magnetic beads are known in the art and can have sizes between 50nm and 10$\mu$m. Preferably the magnetic beads have sizes between 100nm and 5 $\mu$m. Preferably the magnetic beads are suspended in a fluid.

For the purpose of this invention the term 'local magnetic field' should be understood as the magnetic field which is essentially felt by the magnetic bead. Technically other magnetic fields can be generated at the same time when the local magnetic field is generated, but then they have to be sufficiently spatially separated from the bead. Possibly at least one of these contemporary fields may become a local magnetic field later in the controlled transport process according to the present invention.

In preferred embodiments aimed at the application areas of biochips, biotechnology, diagnostics, genetics and molecular studies the magnetic beads are attached to biological or chemical specimen. Also possible is that the biologic or chemical specimen already carries a magnetic moment and coupling to a magnetic bead is not anymore necessary; seen in another way, the biological or chemical specimen can have an integrated magnetic bead.

Preferably the local magnetic field is essentially spread over an area which has dimensions of the order of 5 to 50 times the size of the bead or group of beads. More preferably the local magnetic field is essentially spread over an area which has dimensions of the order of 10 to 40 times the size of the bead or group of beads. A group of beads localised at a location of minimal energy in a magnetic field can have different spatial distributions, induced by the shape of the field. An indicative but not necessarily precise measure for the size of a group of beads can be the distance between begin and end of the group, measured along the current direction. A specific group of beads can thus be defined as a cluster of beads for which each bead is attracted to the same physical location of minimal energy at a given time.

Preferably the application of the local magnetic field is long enough to allow the magnetic bead to move to the location of its lowest energy in the local magnetic field (L_E_min). Embodiments wherein the time of application of the local magnetic field is shorter then the time necessary to allow the magnetic bead to move to the location of its lowest energy in the local magnetic field are also possible, but at the moment of switching to the next local magnetic field, the bead must in that case have reached the influence area of the next local magnetic field such that it is attracted towards the location of its lowest energy in this next local magnetic field.

An aspect of the present invention is that each of the local magnetic fields, which have a gradient different from 0 in the neighbourhood of said magnetic bead, is generated by a single current carrying structure. These current-carrying structures can be created by standard state-of-the-art microelectronic process technology.

The series of N successive local magnetic fields can be generated by M current carrying structures. Each of these current-carrying structures has a non-constant charge current density in order to achieve a gradient different from 0 in the neighbourhood of said magnetic bead.

The non-constant charge current density can be generated by varying the shape of the cross-section of the current-carrying structure.

The non-constant charge current density can be generated by varying the cross-section surface area of the current carrying structure.

The non-constant charge current density can be generated by varying the width of the current carrying structure along the current direction.

The series of N locations of lowest energy (L_E_min {i}, with i between 1 and N) of the magnetic beads, corresponding to the series of N local magnetic fields, defines a predefined path.

In a preferred embodiment M equals 2 and the local magnetic fields are generated alternately in each of the current conducting structures.

Preferably current carrying structures have a periodic shape, formed by repeating a basic structure element.

Preferably this basic structure element has no mirror symmetry with respect to an axis which is orthogonal to the current direction.

Preferably the cross-section surface area is decreasing when going from 1 side of the basic structure element to the other side of the basic structure element, along the current direction.

In a preferred embodiment the current carrying structures are isometric.

In a preferred embodiment the current carrying structures are positioned above each other, being shifted over a distance different from 0 along the current direction.

In another preferred embodiment the current carrying structures are positioned next to each other such that their respective current directions are parallel and wherein both structures are shifted over a distance different from 0 along the parallel direction.

Advantageously the shifted distance equals half the length of the basic structure element.

In a preferred embodiment the basic structure element is sharkfin-like or triangular-like or sawtooth like.

The method according to the present invention can be used in detection schemes for biological or chemical specimen, wherein the controlled transport of biological or chemical specimen is important. The method and devices according to the present invention provide such a controlled transport and mobility of beads and thus test specimen and consequently provides for a new range of new biochip-test schemes; for instance test specimen can be transported towards and from predetermined testing areas on chip.

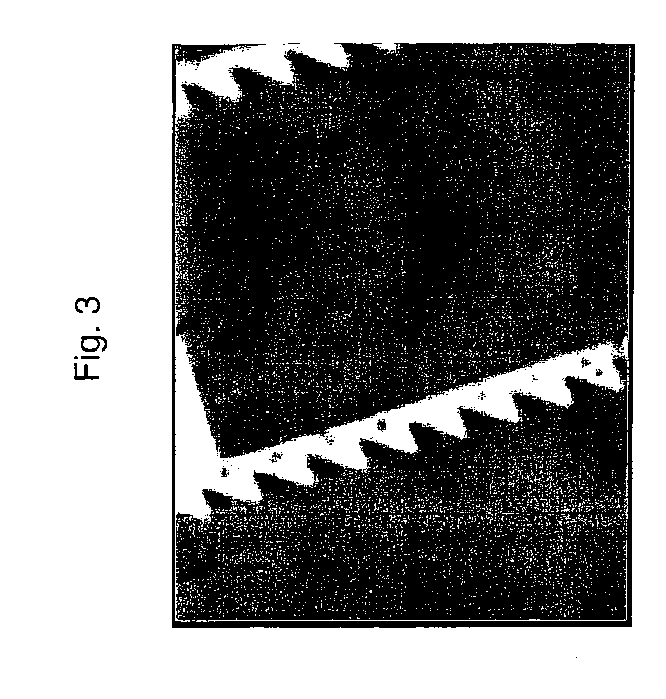

The method and corresponding devices according to the present invention can be applied on a cluster or group of magnetic beads, whereby isolation, alignment and sequencing of magnetic beads is achieved due to the limited spatial resolution of the predetermined path compared to the bead size. These properties can be advantageously used in lab on chip design and analysis methods. They allow for instance the bead per bead - and consequently per one biological or chemical specimen based transport or manipulation. A demonstration of this bead per bead transport is for instance shown in Fig. 3, Fig. 4 and Fig. 7, where the individual beads (corresponding to dark spots in the figures) can be clearly indicated.

The present invention relates thus to a method for the controlled transport of a magnetic bead from a position X to a different position Y along a path P, comprising the steps of:

- applying a plurality of sequentially disposed local magnetic fields which have magnetic field gradients different from 0 in the proximity of said magnetic bead,

  characterised in that the method comprises the step of

- sequentially applying current to a plurality of sequentially disposed current carrying structures, wherein each said current carrying structure has a non-constant charge current density, the applied current generating said local magnetic fields.

Preferably, each said local magnetic field is applied over an area that has dimensions of the order of 5 to 50 times the size of a bead or group of beads.

Preferably, each local magnetic field is applied sufficiently long to allow the magnetic bead to move to the location of its lowest energy in said local magnetic field (L_E_min).

Path P can be defined by the series of N locations of lowest energy (L_E_min {i}) of said magnetic beads, corresponding to said series of N local magnetic fields.

The plurality of sequentially disposed current carrying structures consists of two current carrying structures and where said local magnetic fields are generated alternately in each of said current carrying structures.

The method according to the present invention can further comprise the steps of isolation, alignment and/or sequencing of a group of magnetic beads by providing a limited spatial resolution of said predetermined path compared to the bead size.

In a specific embodiment, a method for the detection of a biological or chemical specimen, comprising transport of a magnetic bead comprising said biological or chemical specimen, is disclosed.

Another aspect of the present invention concerns a device for the controlled transport of magnetic beads from a position X to a different position Y, comprising at least 2 current carrying structures having a non constant charge current density when carrying a current; said current carrying structures being electrically isolated from each other.

The device according to the present invention preferably further comprises a switchable current supply means connected to the current carrying structure(s), said switchable current supply means switching current supply between said current carrying structures at switching frequency.

The current carrying structures can be disposed on a substrate by microelectronic process technology.

Each of the current carrying structures can have a varying shape of their cross-section when moving along the current direction.

Preferably, the cross-section surface area of said current carrying structure is varying when moving along the current direction.

Preferably, the width of said current carrying structure varies along the current direction. Said current carrying structures can have an identical shape and size and can be disposed linearly along the current direction.

Advantageously, the cross-section surface area of a current carrying structure decreases when going from 1 side of the current carrying structure to the other side of the current carrying structure, along the current direction.

Preferably, said current carrying structures are isometric.

In a preferred embodiment, the current carrying structures have an identical shape and size and are disposed such that their respective current directions are parallel and such that the structures are shifted over a distance different from 0 along the parallel direction.

The current carrying structures can be disposed alternately on either side of path P.

The shifted distance equals half the length of a current carrying structure in a preferred embodiment.

The current direction of the current carrying structures can be in the same direction or alternately in the opposite direction.

Preferably, the current carrying structure is sharkfin-like or triangular-like or sawtooth like.

Another aspect of the present invention concerns a method for performing analysis of a biospecimen by means of a biochip, comprising the step of attaching said biospecimen to a magnetic bead, and wherein transport of said biospecimen between different functional regions on said biochip is performed according to the method according to the present invention; and further comprising the steps of:

- transporting said biospecimen to a specific location on said biochip.
- transporting said biospecimen away from said specific location.

The method preferably further comprises the steps of

- Applying prior to the transporting of the bead a biological probe in a specific location, and
- Allowing a biological recognition reaction between said biological probe and the biospecimen when the bead is in said location, wherein the bead is immobilised at said location.

The biological recognition reaction can be selected from the group consisting of DNA-DNA, DNA-RNA, RNA-RNA, protein-nucleic acid, protein-protein, receptor-ligand, and antibody-antigen interactions.

The method can further comprise a step of performing or allowing a biochemical analysing step on said biospecimen on said specific location.

Another aspect of the present invention is a biochip for transporting, separating, aligning of beads and corresponding biospecimen, said biochip comprising a device according to the present invention.

## Short description of the drawings

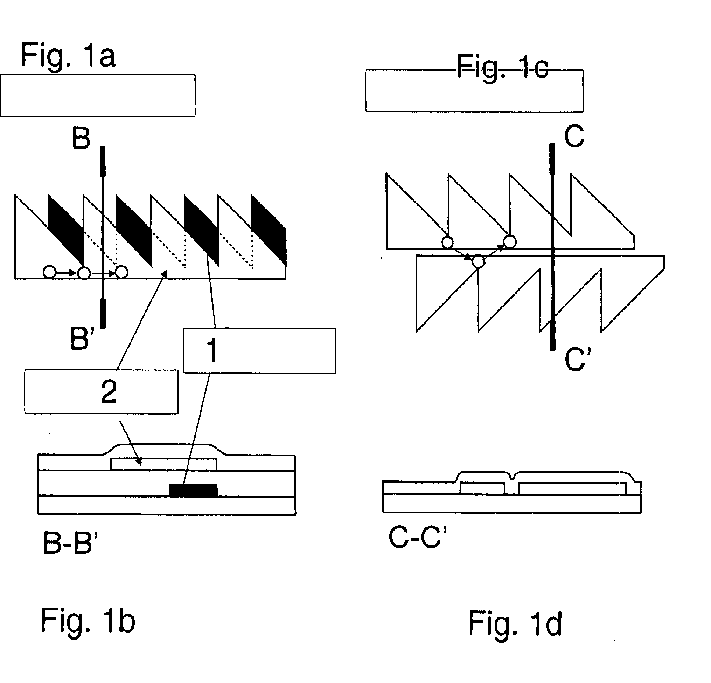

Fig. 1a and 1b illustrate a preferred embodiment of the present invention for which the fabrication comprises 2 metallisation steps ((1)+(2)). Fig. 1c and 1d illustrate a preferred embodiment of the present invention for which the fabrication comprises 1 metallisation step. Fig. 1a and 1c are top views. Fig. 1b and 1d are cut-views along respectively the lines B-B' and C-C'.

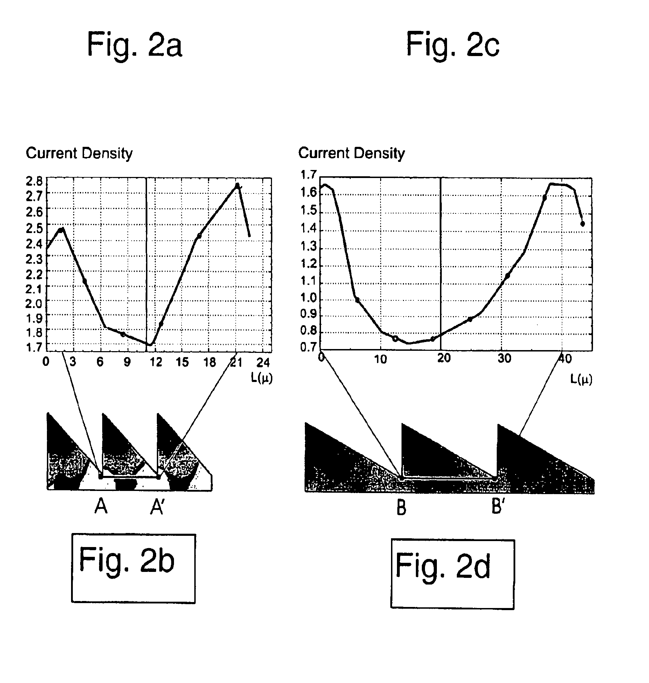

Fig. 2b and 2d illustrate 2 current carrying structures according to an embodiment of the current invention, wherein the 2 current carrying structures differ by a difference in the length (A-A', B-B') of the basic structure element.

Fig. 2a and Fig. 2c are showing the evolution of the current density in function of the longitudinal position in the basic structure element. The current densities in Fig. 2 are in arbitrary units.

Fig. 3 is a picture of a practical realisation of a preferred embodiment of the present invention, corresponding to Fig 1a.

Fig. 4 is a picture of a practical realisation of a preferred embodiment of the present invention, corresponding to Fig 1c.

Fig. 5 shows experimental results that illustrate the relation between the average speed of the bead and the current in the current carrying structure according to a preferred embodiment of the present invention, for different values of the width of the basic structure element.

Fig. 6 shows experimental results that illustrate the relation between the average speed of the bead and the current in the current carrying structure according to a preferred embodiment of the present invention, for different values of the length of the basic structure element.

Fig. 7 shows microscopic images of single particle movement: (a), (b) and (c) show the stepwise moment of particle on a dual metallisation device and (x), (y) and (z) for a single metallisation device.

## Detailed description of the invention

Movement of magnetic beads in a 1-dimensional way is achieved by applying a magnetic force:

$$\vec{F} = \vec{\nabla}(\vec{M} \cdot \vec{B})$$

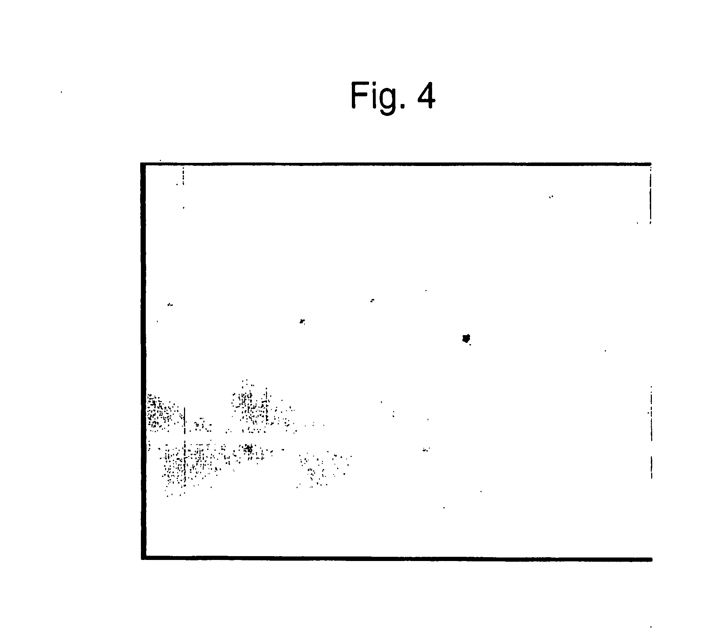

Such a magnetic force can thus be generated by both magnetising the super-paramagnetic bead and creating a magnetic field gradient. On-chip field generation lines can create both. Figure 1a-b (can be fabricated using 2 metallisation steps) and Fig. 1c-d (can be fabricated using a single metallisation step) show structures that are able to form a magnetic field gradient and hence are able to pull a magnetic bead towards the smallest width of the conductor or current carrying structure. Pictures of the corresponding real examples are depicted in Fig. 3 and 4. As can be derived from Fig. 2a-b (basic elementary structure corresponding to a length of $20\mu$ m and a width of 20 $\mu$m) and Fig. 2c-d (basic elementary structure corresponding to a length of 40 $\mu$m and a width of 20 $\mu$m), the structures can be characterised in that they generate a magnetic field gradient different from 0 because their current density within each basic structure element is not constant. These structures have a periodically repeating basic structural element. In this case the basic structural element is sharkfin-like, but this can also be triangular (double-sharkfin), sawtooth-like or can have other shapes. By shifting a second conductor half a period from the first, magnetic beads can be moved in a peristaltic way from one minimal width to another. This occurs by switching alternatingly DC currents through the conductors. For the given examples of current carrying structures a magnetic bead size of the order of 2 $\mu$m can be preferred.

Preferably both conductors behave magnetically in a similar way. In order to do this, for instance a first metallisation [TiW (10nm) / Au (150nm) / TiW (10nm)] can be deposited on the substrate, which can be followed by a passivation layer $Si_3N_4$ [500nm]. To start with a flat surface, a CMP step flattens the topography, keeping a certain thickness of the $Si_3N_4$ to isolate both conductors. The second metallisation can be deposited in exactly the same way as the previous one, again followed by a passivation layer. In this way, both conductors have the same current distribution and hence the same magnetic behaviour. Other planarisation steps, such as Spin on glass (SOG) or damascene process technology can replace the Chemical Mechanical Polishing (CMP) step.

A coplanar transporting device can be fabricated using standard semiconductor fabrication and photolithography techniques onto Si substrates with 300nm thermal $SiO_2$. The current conductors (TiW 10nm, / Au 150 nm, / TiW 10 nm) were evaporated and patterned using a lift off process. Polyimide was then spun onto the substrates as a passivation layer. After spinning, the polyimide was cured at 350°C for 20 minutes. Finally, contact paths were opened to the conductors and the device was packaged in such a way as to allow the magnetic particle fluid to be dispensed onto the chip's surface.

For the stacked conductor device (see Fig. 1A), it is preferred to planarise the surface on top of the first conductor prior to the deposition of the second, to make both conductors behave magnetically in a similar way. Polyimide was used for this planarisation step after which a second current conductor was deposited. Finally, a second polyimide layer was spun onto the substrates to act as a passivation layer and contact paths were opened to the conductors.

Currents have been applied of up to 100mA through the magnetic field generating current conductors by means of a current source, and a switching means to switch the current source between both conductors was applied.

A PC was used to control the current value and the switching frequency. A CCD camera was used for optical monitoring of the movement of the magnetic particles.

Beads with a very uniform size distribution were used for the experiments, which contain 15% magnetite $Fe_2O_4$ in a dextran matrix to form regularly shaped particles with a diameter of 2 microns. These particles can be coated with covalently bound biological agents such as DNA and proteins, without significantly changing the behaviour of the particles. The particles were suspended in water (other liquids are of course possible), with a magnetic particle density of around 0.0625mg/ml. A volume of 3 $\mu l$ was used for each experiment. As soon as the currents are applied, the magnetic beads become magnetised and start to move towards the current line edges, driven by the gradient in the magnetic field.

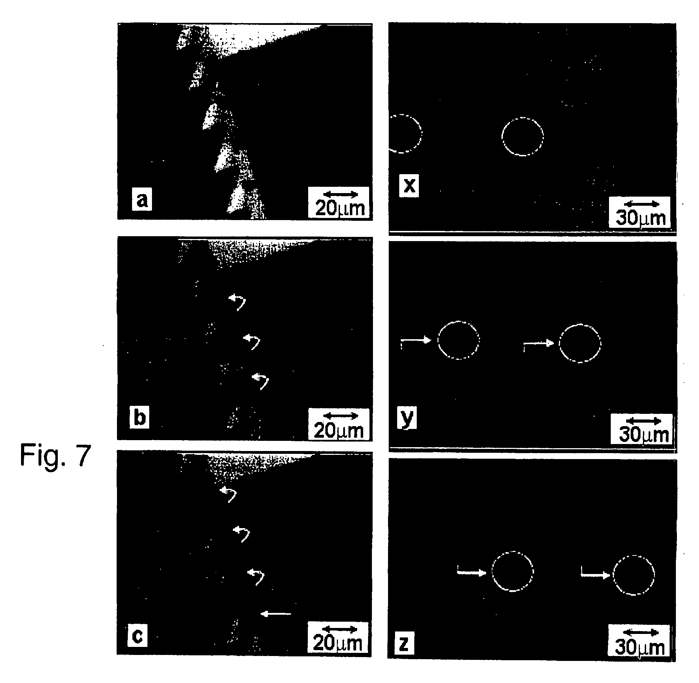

By applying a current of 50mA alternately through the two conductors at a frequency of 0.10Hz (a single) magnetic particle(s) can be trapped and guided step-wise along the magnetic track defined by the conductors. Fig. 7 shows a sequence of images demonstrating the movement of a single magnetic particle for both a single metallisation scheme (x, y, z) and a dual metallisation (a, b, c). Fig. 7a shows a series of magnetic beads positioned at the narrow sections of the bottom conductor while a DC-current is flowing through, while Fig. 7b shows the new position of the beads for a subsequent current pulse through the upper conductor. In Fig. 7c the current is flowing again through the bottom conductor after which one can clearly see that the magnetic beads have moved forward over a whole period.

Fig. 7x,7y,7z show a similar sequence for the case of a single metallisation scheme.

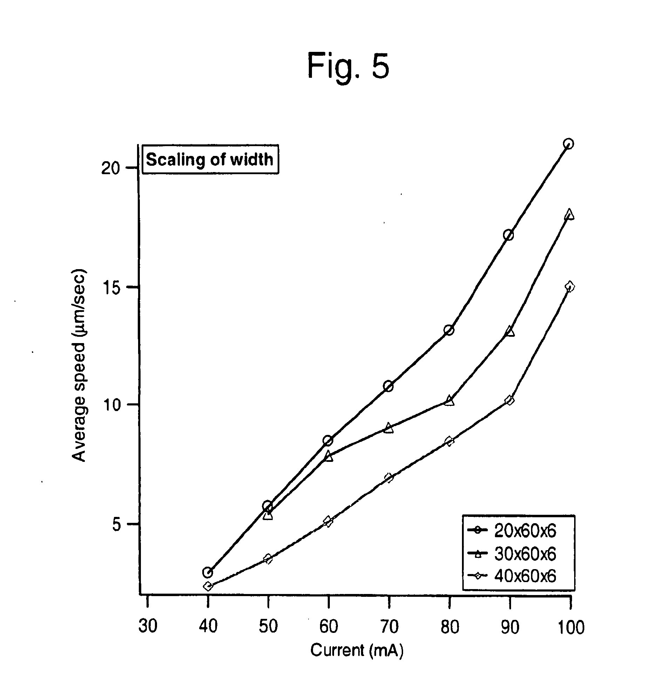

In order to compare the transport efficiency for different structures, one can define the average speed of a magnetic bead as the distance, over which the bead is transported, divided by the minimal time needed to reach the next minimal cross-section (of the other conductor). This time can be deduced from the maximum switching frequency. For each experiment a single magnetic bead was transported in order to minimise variations in magnetic moment. As expected, increasing the current increases the average speed of the magnetic particle (illustrated in Fig. 5). An increase of the current increases the generated magnetic field and hence increases the magnetic force, which is related to the average speed.

Fig. 5 also shows the influence of scaling the width of the basic triangular structure: decreasing the width results in an increase of the average speed of the magnetic particles. One may conclude that decreasing the width will decrease the magnetic field gradient and hence lower the magnetic force and average speed. However, since a decrease in the width will result in a higher average current density, it will also increase the generated magnetic field. The latter turns out to be the dominant factor.

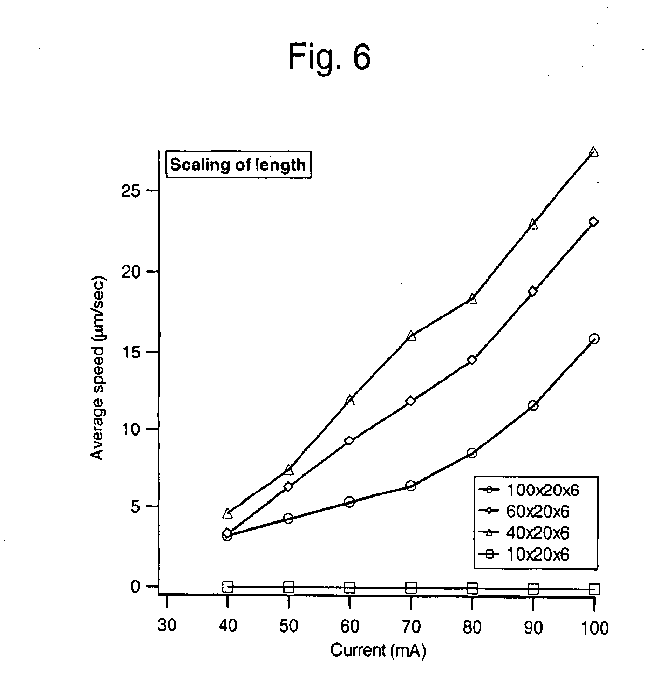

Fig. 6 shows the influence of scaling the length of the basic triangular structure. In a similar way, increasing the current results in a higher average speed. In this case, increasing the length results in a lower average speed. Again, since increasing the length decreases the magnetic field gradient, the magnetic force and the average speed are lowered. The current density is less affected and not dominant in this case.

Decreasing the length will increase the force and hence the average speed of the magnetic particle(s). However, at some point it is not possible anymore to further increase the magnetic force by only scaling down the length.

In Fig. 2, the results of this simulation for two different structures are shown.

To increase the force on a magnetic bead, one can deposit a flux-guiding material underneath the first conductor. In this way, the generated magnetic field -and hence the magnetic force- can be doubled on top of the conductor. This can either increase the magnetic force on a magnetic bead or decrease the current through the conductor and in this way, lower the heating (Joule) effect. Experimental results prove the efficiency of such a configuration.

Both the current and the shape of the conductor will determine the switching speed and hence the overall speed of the (group of) magnetic bead(s).

Fig. 5 shows experimental results that illustrate the relation between the average speed of the bead and the current in the current carrying structure for different values of the width of the basic structure element. Results are plotted for basic structural elements with widths of 20, 30 and 40μm, for a length of 60μm and a thickness of 6 μm.

Fig. 6 shows experimental results that illustrate the relation between the average speed of the bead and the current in the current carrying structure for different values of respectively the length of the basic structure element. Results are plotted for basic structural elements with lengths of 10, 40, 60 and 100μm, for a width of 20μm and a thickness of 6 μm.

Typical currents can be between 10 and 100mA, but higher or lower currents are not excluded.

Fig. 7 shows microscopic images of single particle movement: (a), (b) and (c) show the stepwise moment of particle on a dual metallisation device and (x), (y) and (z) for a single metallisation device.

**Claims**

1.  A method for the controlled transport of a magnetic bead from a position X to a different position Y along a path P on a substrate, comprising the steps of:

    • applying a plurality of sequentially disposed local magnetic fields which have magnetic field gradients different from 0 in the proximity of said magnetic bead,
    **characterised in that** the method comprises the step of
    • sequentially applying current to a plurality of sequentially disposed current carrying structures, wherein each said current carrying structure has a non-constant charge current density, the applied current generating said local magnetic fields.

2.  Method according to claim 1, wherein each said local magnetic field is applied over an area that has dimensions of the order of 5 to 50 times the size of a bead or group of beads.

3.  Method according to claim 1 or 2, wherein each local magnetic field is applied sufficiently long to allow the magnetic bead to move to the location of its lowest energy in said local magnetic field (L E min).

4.  Method according to claim 1 to 3, wherein path P is defined by the series of N locations of lowest energy (L_E_min {i}) of said magnetic beads, corresponding to said series of N local magnetic fields.

5.  Method according to claim 1 to 4, wherein the plurality of sequentially disposed current carrying structures consists of two current carrying structures and where said local magnetic fields are generated alternately in each of said current carrying structures.

6.  Method according to claim 1 to 5, further comprising the steps of isolation, alignment and/or sequencing of a group of magnetic beads by providing a limited spatial resolution of said predetermined path compared to the bead size.

7.  A method for the detection of a biological or chemical specimen, comprising transport of a magnetic bead comprising said biological or chemical specimen, as in the method according to any of the claims 1 to 6.

8.  A device for the controlled transport of magnetic beads from a position X to a different position Y, comprising at least two current carrying structures having a non constant charge current density when carrying a current; said current carrying structures being electrically isolated from each other.

9.  The device according to claim 8, further comprising a switchable current supply means connected to the current carrying structure(s), said switchable current supply means switching current supply between said current carrying structures at switching frequency.

10. Device according to claim 8 or 9, wherein the current carrying structures are disposed on a substrate by microelectronic process technology.

11. Device according to any of the claims 8 to 10, wherein each of the current carrying structures have a varying shape of their cross-section when moving along the current direction.

12. Device according to any of the claims 8 to 11, wherein the cross-section surface area of said current carrying structure is varying when moving along the current direction.

13. Device according to any of the claims 8 to 12, wherein the width of said current carrying structure varies along the current direction.

14. Device according to any of the claims 8 to 13, wherein said current carrying structures have an- identical shape and size and are disposed linearly along the current direction.

15. Device according to any of the claims 8 to 14, wherein the cross-section surface area of a current carrying structure decreases when going from one side of the current carrying structure to the other side of the current carrying structure, along the current direction.

16. Device according to any of the claims 8 to 15, wherein said current carrying structures are isometric.

17. Device according to any of the claims 8 to 13, wherein the current carrying structures have an identical shape and size and are disposed such that their respective current directions are parallel and such that the structures are shifted over a distance different from 0 along the parallel direction.

18. Device according to claim 17, wherein the current carrying structures are disposed alternately on either side of path P.

19. Device according to claim 17 or 18, wherein the shifted distance equals half the length of a current carrying structure.

20. Device according to claim 17 or 18, wherein the current direction of the current carrying structures is in the same direction.

21. Device according to claim 17 or 18, wherein the current direction of the current carrying structures is alternately in the opposite direction.

22. Device according to any of the claims 8 to 19, wherein the current carrying structure is sharkfin-like or triangular-like or sawtooth like.

23. A method for performing analysis of a biospecimen by means of a biochip, comprising the step of attaching said biospecimen to a magnetic bead, and wherein transport of said biospecimen between different functional regions on said biochip is performed according to the method according to any of the claims 1 to 7; and further comprising the steps of:

   - transporting said biospecimen to a specific location on said biochip.
   - transporting said biospecimen away from said specific location.

24. The method according to claim 23, wherein the method further comprises the steps of

   • Applying prior to the transporting of the bead a biological probe in a specific location, and
   • Allowing a biological recognition reaction between said biological probe and the biospecimen when the bead is in said location, wherein the bead is immobilised at said location.

25. The method according to claim 24, wherein the biological recognition reaction is selected from the group consisting of DNA-DNA, DNA-RNA, RNA-RNA, protein-nucleic acid, protein-protein, receptor-ligand, and antibody-antigen interactions.

26. The method according to any of the claims 23 to 25, further comprising a step of

   - performing or allowing a biochemical analysing step on said biospecimen on said specific location.

27. A biochip for transporting, separating, aligning of beads and corresponding biospecimen, said biochip comprising a device according to claim 8 to 20.

**Patentansprüche**

1. Verfahren zum kontrollierten Transport einer magnetischen Kugel aus einer Position X in eine verschiedene Position Y entlang einem Weg P auf einem Substrat, welches die nachfolgenden Schritte umfasst:

   • ein Anlegen eine Mehrzahl von nacheinander angeordneten lokalen magnetischen Feldern, welche magnetische Feldgradienten verschieden von 0 in der Umgebung der besagten magnetischen Kugel aufweisen, **dadurch gekennzeichnet, dass** das Verfahren den darin bestehenden Schritt umfasst
   • nacheinander einen Strom an eine Mehrzahl von nacheinander angeordneten Strom führenden Strukturen anzulegen, wobei eine jede der besagten Strom führenden Strukturen eine nicht konstante Ladungsstromdichte aufweist und wobei der angelegte Strom die besagten lokalen, magnetischen Felder erzeugt.

2. Verfahren gemäß Anspruch 1, bei welchem ein jedes besagte lokale, magnetische Feld über eine Fläche angelegt ist, welche Dimensionen von der Größenordnung von 5- bis 50-mal die Größe einer Kugel oder einer Gruppe von Kugeln aufweist.

3. Verfahren gemäß Anspruch 1 oder 2, bei welchem ein jedes lokale, magnetische Feld ausreichend lange angelegt wird, um es der magnetischen Kugel zu ermöglichen, sich zu dem Ort ihrer niedrigsten Energie in dem besagten lokalen, magnetischen Feld zu bewegen (L_E_min).

4. Verfahren gemäß den Ansprüchen 1 bis 3, bei welchem der Weg P definiert wird durch die Serien von N Orten mit niedrigster Energie (L_E_min {i}) der besagten magnetischen Kugeln, entsprechend den besagten Serien von N lokalen, magnetischen Feldern.

5. Verfahren gemäß den Ansprüchen 1 bis 4, bei welchem die Mehrzahl der nacheinander angeordneten Strom führenden Strukturen aus zwei Strom führenden Strukturen besteht und bei welchem die besagten lokalen, magnetischen Felder abwechselnd in einer jeden der besagten Strom führenden Strukturen erzeugt werden.

6. Verfahren gemäß den Ansprüchen 1 bis 5, welches weiterhin die Schritte der Isolation, der Ausrichtung und /oder des Sequentialisierens einer Gruppe von magnetischen Kugeln umfasst, indem eine begrenzte räumliche Auflösung des besagten, vorherbestimmten Weges im Vergleich zu der Kugelgröße bereitgestellt wird.

7. Verfahren zum Nachweis einer biologischen oder chemischen Probe, welches den Transport einer magnetischen Kugel umfasst, welche die besagte biologische oder chemische Probe enthält, so wie in dem Verfahren gemäß irgendeinem der vorhergegangenen Ansprüche 1 bis 6.

8. Vorrichtung für den kontrollierten Transport von magnetischen Kugeln von einer Position X zu einer verschiedenen Position Y, welche mindestens zwei Strom führende Strukturen mit einer nicht konstanten Ladungsstromdichte umfasst, wenn sie einen Strom führen; wobei die besagten Strom führenden Strukturen elektrisch voneinander isoliert sind.

9. Vorrichtung gemäß Anspruch 8, welche ferner eine umschaltbare Stromversorgungseinrichtung aufweist, welche mit der(n) Strom führenden Struktur(en) verbunden ist, wobei die besagte umschaltbare Stromversorgungseinrichtung die Stromzufuhr zwischen den besagten Strom führenden Strukturen bei einer Umschaltfrequenz hin und her umschaltet.

10. Vorrichtung gemäß Anspruch 8 oder 9, bei welchem die Strom führenden Strukturen durch eine mikroelektronische Verfahrenstechnologie auf einem Substrat angeordnet sind.

11. Vorrichtung gemäß irgendeinem der Ansprüche 8 bis 10, bei welchem eine jede der Strom führenden Strukturen eine variierende Form ihres Querschnitts aufweist, wenn sie sich entlang der Stromrichtung bewegt.

12. Vorrichtung gemäß irgendeinem der Ansprüche 8 bis 11, bei welchem das Oberflächengebiet des Querschnitts der besagten Strom führenden Struktur variiert, wenn sie sich entlang der Stromrichtung bewegt.

13. Vorrichtung gemäß irgendeinem der Ansprüche 8 bis 12, bei welchem die Breite der besagten Strom führenden Struktur entlang der Stromrichtung variiert.

14. Vorrichtung gemäß irgendeinem der Ansprüche 8 bis 13, bei welcher die besagten Strom führenden Strukturen eine identische Form und Größe aufweisen und linear entlang der Stromrichtung angeordnet sind.

15. Vorrichtung gemäß irgendeinem der Ansprüche 8 bis 14, bei welchem das Oberflächengebiet des Querschnitts einer Strom führenden Struktur abnimmt, wenn es von einer Seite der Strom führenden Struktur zu der anderen Seite der Strom führenden Struktur entlang der Stromrichtung geht.

16. Vorrichtung gemäß irgendeinem der Ansprüche 8 bis 15, bei welchem die besagten Strom führenden Strukturen isometrisch sind.

17. Vorrichtung gemäß irgendeinem der Ansprüche 8 bis 13, bei welcher die Strom führenden Strukturen eine identische Form und Größe aufweisen und derart angeordnet sind, dass ihre jeweiligen Stromrichtungen parallel sind und derart, dass die Strukturen über eine von 0 verschiedene Entfernung entlang der parallelen Richtung verschoben werden.

18. Vorrichtung gemäß Anspruch 17, bei welcher die Strom führenden Strukturen abwechselnd auf einer jeden Seite des Weges P angeordnet sind.

19. Vorrichtung gemäß Anspruch 17 oder 18, bei welcher die verschobene Entfernung die gleiche ist wie die Hälfte der Länge einer Strom führenden Struktur.

20. Vorrichtung gemäß Anspruch 17 oder 18, bei welcher die Stromrichtung der Strom führenden Strukturen in derselben Richtung liegt.

21. Vorrichtung gemäß Anspruch 17 oder 18, bei welcher die Stromrichtung der Strom führenden Strukturen abwechselnd in der entgegengesetzten Richtung liegt.

22. Vorrichtung gemäß irgendeinem der Ansprüche 8 bis 19, bei welchem die Strom führende Struktur eine haifischflossenähnliche oder eine dreiecksähnliche oder eine sägezahnähnliche Form aufweist.

23. Verfahren zum Durchführen einer Analyse einer Bioprobe mittels eines Biochips, welches als Schritt das Befestigen der besagten Bioprobe an einer magnetischen Kugel umfasst, und wobei der Transport der besagten Bioprobe zwischen verschiedenen funktionalen Gebieten auf dem besagten Biochip gemäß dem Verfahren nach irgendeinem der Ansprüche 1 bis 7 durchgeführt wird; und welches ferner die nachfolgenden Schritte umfasst:

    - ein Transportieren der besagten Bioprobe zu einem spezifischen Ort auf dem besagten Biochip.
    - ein Transportieren der besagten Bioprobe weg von dem spezifischen Ort.

24. Verfahren gemäß Anspruch 23, bei welchem das Verfahren ferner die nachfolgenden Schritte umfasst:

    - ein Anlegen einer biologischen Sonde an einem spezifischen Ort vor dem Transportieren der Kugel, und
    - ein Ermöglichen einer biologischen Erkennungsreaktion zwischen der besagten biologischen Sonde und der Bioprobe, wenn sich die Kugel an dem besagten Ort befindet, wobei die Kugel an dem besagten Ort immobilisiert wird.

25. Verfahren gemäß Anspruch 24, bei welchem die biologische Erkennungsreaktion ausgewählt ist aus der Gruppe bestehend aus DNA-DNA, DNA-RNA, RNA-RNA, Protein-Nukleinsäure, Protein-Protein, Rezeptor-Ligand und Antikörper-Antigen Wechselwirkungen.

26. Verfahren gemäß irgendeinem der Ansprüche 23 bis 25, welches ferner einen darin bestehenden Schritt umfasst einen biochemischen Analyseschritt an der besagten Bioprobe an dem besagten spezifischen Ort durchzuführen oder zu ermöglichen.

27. Biochip zum Transportieren, Trennen, Ausrichten von Kugeln und der entsprechenden Bioprobe, wobei der besagte Biochip eine Vorrichtung gemäß den Ansprüchen 8 bis 20 umfasst.

**Revendications**

1. Procédé pour le transport contrôlé d'une bille magnétique d'une position X à une position différente Y le long d'un chemin P sur un substrat, comprenant les étapes:

   • d'application d'une pluralité de champs magnétiques locaux disposés séquentiellement qui présentent des gradients de champs magnétiques différents de 0 à la proximité de ladite bille magnétique,
   **caractérisé en ce que** le procédé comprend l'étape:
   • d'application séquentielle d'un courant à une pluralité de structures conductrices de courant disposées séquentiellement, où chacune desdites structures conductrices de courant possède une densité de courant à charge non constante, le courant appliqué générant lesdits champs magnétiques locaux.

2. Procédé selon la revendication 1, dans lequel chacun desdits champs magnétiques locaux est appliqué sur une surface qui possède des dimensions de l'ordre de 5 à 50 fois la taille d'une bille ou d'un groupe de billes.

3. Procédé selon la revendication 1 ou 2, dans lequel chaque champ magnétique local est appliqué suffisamment longtemps pour permettre à la bille magnétique de se déplacer vers la localisation de son énergie la plus basse dans ledit champ magnétique local (L_E_min).

4. Procédé selon les revendications 1 à 3, dans lequel le chemin P est défini par la série de N localisations d'énergie la plus basse (L E min {i}) desdites billes magnétiques, correspondant à ladite série de N champs magnétiques locaux.

5. Procédé selon les revendications 1 à 4, dans lequel la pluralité de structures conductrices de courant disposées séquentiellement est constituée de deux structures conductrices de courant et dans lequel lesdits champs magnétiques locaux sont générés alternativement dans chacune desdites structures conductrices de courant.

6. Procédé selon les revendications 1 à 5, comprenant en outre les étapes d'isolement, d'alignement et/ou de séquençage d'un groupe de billes magnétiques en apportant une résolution spatiale limitée dudit chemin prédéterminé par rapport à la taille des billes.

7. Procédé pour la détection d'un échantillon biologique ou chimique, comprenant le transport d'une bille magnétique comprenant ledit échantillon biologique ou chimique, comme dans le procédé selon l'une quelconque des revendications 1 à 6.

8. Dispositif pour le transport contrôlé de billes magnétiques d'une position X à une position différente Y, comprenant au moins deux structures conductrices de courant présentant une densité de courant à charge non constante lorsqu'elles conduisent un courant; lesdites structures conductrices de courant étant électriquement isolées les unes des autres.

9. Dispositif selon la revendication 8, comprenant en outre un moyen d'alimentation de courant commutable connecté à la ou aux structures conductrices de courant, ledit moyen d'alimentation de courant commutable commutant l'alimentation de courant entre lesdites structures conductrices de courant à une fréquence de commutation.

10. Dispositif selon la revendication 8 ou 9, dans lequel les structures conductrices de courant sont disposées sur un substrat par une technologie de procédé microélectronique.

11. Dispositif selon l'une quelconque des revendications 8 à 10, dans lequel chacune des structures conductrices de courant présente une forme qui varie de leur section transversale lorsque l'on se déplace le long de la direction de courant.

12. Dispositif selon l'une quelconque des revendications 8 à 11, dans lequel l'aire de surface de section transversale de ladite structure conductrice de courant varie lorsque l'on se déplace le long de la direction de courant.

13. Dispositif selon l'une quelconque des revendications 8 à 12, dans lequel la largeur de ladite structure conductrice de courant varie le long de la direction de courant.

14. Dispositif selon l'une quelconque des revendications 8 à 13, dans lequel lesdites structures conductrices de courant présentent une forme et une taille identiques et sont disposées linéairement le long de la direction de courant.

**15.** Dispositif selon l'une quelconque des revendications 8 à 14, dans lequel l'aire de surface de section transversale d'une structure conductrice de courant diminue lorsque l'on va d'un côté de la structure conductrice de courant à l'autre côté de la structure conductrice de courant, le long de la direction de courant.

**16.** Dispositif selon l'une quelconque des revendications 8 à 15, dans lequel lesdites structures conductrices de courant sont isométriques.

**17.** Dispositif selon l'une quelconque des revendications 8 à 13, dans lequel les structures conductrices de courant présentent une forme et une taille identiques et sont disposées de sorte que leurs directions de courant respectives sont parallèles et de sorte que les structures sont décalées sur une distance différente de 0 le long de la direction parallèle.

**18.** Dispositif selon la revendication 17, dans lequel les structures conductrices de courant sont disposées alternativement de part et d'autre du chemin P.

**19.** Dispositif selon la revendication 17 ou 18, dans lequel la distance décalée est égale à la moitié de la longueur d'une structure conductrice de courant.

**20.** Dispositif selon la revendication 17 ou 18, dans lequel la direction de courant des structures conductrices de courant est dans la même direction.

**21.** Dispositif selon la revendication 17 ou 18, dans lequel la direction de courant des structures conductrices de courant est alternativement dans la direction opposée.

**22.** Dispositif selon l'une quelconque des revendications 8 à 19, dans lequel la structure conductrice de courant est du type aileron de requin ou du type triangulaire ou du type dent de scie.

**23.** Procédé pour effectuer une analyse d'un bioéchantillon au moyen d'une biopuce, comprenant l'étape de fixation dudit bioéchantillon à une bille magnétique et dans lequel le transport dudit bioéchantillon entre différentes régions fonctionnelles sur ladite biopuce est effectué selon le procédé selon l'une quelconque des revendications 1 à 7; et comprenant en outre les étapes consistant à:

- transporter ledit bioéchantillon vers une localisation spécifique sur ladite biopuce,
- transporter ledit bioéchantillon en l'éloignant de ladite localisation spécifique.

**24.** Procédé selon la revendication 23, dans lequel le procédé comprend en outre les étapes consistant:

• à appliquer avant le transport de la bille une sonde biologique dans une localisation spécifique, et
• à permettre une réaction de reconnaissance biologique entre ladite sonde biologique et le bioéchantillon lorsque la bille est dans ladite localisation, où la bille est immobilisée à ladite localisation.

**25.** Procédé selon la revendication 24, dans lequel la réaction de reconnaissance biologique est choisie dans le groupe constitué d'interactions ADN-ADN, ADN-ARN, ARN-ARN, protéine-acide nucléique, protéine-protéine, récepteur-ligand et anticorps-antigène.

**26.** Procédé selon l'une quelconque des revendications 23 à 25, comprenant en outre une étape consistant:

- à effectuer ou à permettre une étape d'analyse biochimique sur ledit bioéchantillon sur ladite localisation spécifique.

**27.** Biopuce pour le transport, la séparation, l'alignement de billes et du bioéchantillon correspondant, ladite biopuce comprenant un dispositif selon les revendications 8 à 20.

Fig. 1a

Fig. 1c

B

B'

C

C'

1

2

Fig. 1b

B-B'

Fig. 1d

C-C'

# Fig. 2a

# Fig. 2c

Fig. 2b

Fig. 2d

EP 1 462 174 B1

# Fig. 3

Fig. 4

# Fig. 5

EP 1 462 174 B1

EP 1 462 174 B1

# Fig. 6

Scaling of length

100x20x6
60x20x6
40x20x6
10x20x6

Average speed (µm/sec)

Current (mA)

Fig. 7